# FASCICULE DE BREVET EUROPEEN

(11) **EP 1 119 962 B1**
(45) Date de publication et mention de la délivrance du brevet: **24.07.2002**
(21) Numéro de dépôt: 99947522.1
(22) Date de dépôt: 08.10.1999
(51) Int. Cl.: H04N 5/00, H04N 7/24, G06F 9/445

(54) **GESTIONNAIRE D'APPLICATIONS AVEC JEU D'INSTRUCTIONS DE GESTION VARIABLE**
SYSTEM ZUM VERWALTEN VON ANWENDUNGSPROGRAMMEN MIT EINEM VARIABLEN VERWALTUNGSBEFEHLSSATZ
APPLICATION MANAGER WITH VARIABLE MANAGING INSTRUCTION SET

(30) Priorité: 08.10.1998 FR 9812600
(43) Date de publication de la demande: 01.08.2001
(73) Titulaire: THOMSON multimedia, 92100 Boulogne Billancourt (FR)
(72) Inventeur: DIEHL, Eric, F-92648 Boulogne Cedex (FR); LETELLIER, Philippe Thomson multimedia, F-92648 Boulogne Cedex (FR); HOUEIX, Pierre Thomson multimedia, F-92648 Boulogne Cedex (FR); SCHAEFER, Ralf Thomson multimedia, F-92648 Boulogne Cedex (FR)
(74) Mandataire: Kohrs, Martin
(86) Numéro de dépôt international: FR9902426
(87) Numéro de publication internationale: WO0022815

(56) Documents cités:
- US-A- 4 419 726
- US-A- 5 097 407
- US-A- 5 635 979
- US-A- 5 666 293
- US-A- 5 734 904
- US-A- 5 768 539
- PATENT ABSTRACTS OF JAPAN vol. 1998, no. 09, 31 juillet 1998 (1998-07-31) & JP 10 091216 A (KYUSHU SYST JOHO GIJUTSU KENKYUSHO;LOGIC RES:KK), 10 avril 1998 (1998-04-10)

## Description

L'invention concerne un système de traitement d'information permettant de traiter des données provenant d'au moins une application, comprenant un gestionnaire d'applications exécutant un jeu d'instructions de gestion. L'invention concerne également un décodeur numérique recevant notamment des applications par le biais d'un bouquet de programmes de télévision. L'art antérieur dans ce domaine est illustré par le document US-A-5097407.

Un système de traitement d'informations peut être une machine qui permet de traiter des données provenant d'une application. L'application peut être un ensemble de données. Les données constituent en général une suite d'instructions formulées dans un langage de programmation. Le système de traitement d'informations peut être réalisé en utilisant notamment un système d'exploitation et un système d'exécution recevant des données d'une application. Le système de traitement de l'information peut également comprendre d'autres systèmes permettant de gérer des périphériques attachés à celui-ci et de façon générale tout ce qui n'est pas pris en charge par les systèmes d'exploitation et d'exécution.

Un système de traitement d'informations selon l'invention, telle que définie en revendication 1, permet de traiter des données provenant d'au moins une application et comprend :
- un système d'exploitation pour exécuter l'application,
- un système d'exécution, et
- un gestionnaire d'applications pouvant exécuter au moins un jeu d'instructions de gestion variable pour influer sur le système d'exploitation et/ou sur le système d'exécution notamment lorsque l'application est exécutée ou lors d'un passage de l'exécution de l'application à une autre exécution d'une autre application.

Une première réalisation de l'invention prévoit que le système de traitement d'informations comprend un moyen de chargement du jeu d'instructions de gestion variable à partir d'une source d'instructions de gestion vers le gestionnaire d'application.

Une seconde réalisation de l'invention prévoit que la source d'instructions de gestion est l'application elle-même.

Une troisième réalisation de l'invention prévoit que la source d'instructions de gestion provient d'un fournisseur de l'application.

Un décodeur numérique selon l'invention reçoit au moins une application par le biais de données de services d'un flux numérique, et comprend :
- un système d'exploitation,
- une machine virtuelle permettant d'exécuter au moins une application, et
- un gestionnaire d'applications pouvant exécuter au moins un jeu d'instructions de gestion variable pour influer sur le système d'exploitation et/ou sur la machine virtuelle lorsque l'application est exécutée ou lors d'un passage de l'exécution de l'application à une autre exécution d'une autre application.

Une quatrième réalisation de l'invention prévoit que le jeu d'instructions de gestion variable est de nature déclarative statique. Le jeu d'instructions de gestion décrit des fonctions relatives à un état ou à une transition d'une application en exécution à un autre programme. Chaque application peut contenir dans un préambule un jeu d'instructions de gestion de nature déclarative statique.

Une cinquième réalisation de l'invention prévoit que le gestionnaire d'applications comprend plusieurs jeux d'instructions de gestion variable provenant de plusieurs sources d'instructions de gestion.

Une sixième réalisation de l'invention prévoit que le gestionnaire d'application comprend un moyen de sélection du jeu d'instructions de gestion variable qui sélectionne un jeu d'instructions de gestion d'après au moins un critère déterminé afin que le jeu d'instructions de gestion sélectionné soit exécuté en priorité.

Dans ce qui suit, des exemples de réalisation de l'invention sont décrits afin de mieux comprendre celle-ci. Il est fait référence aux figures 1 à 3 :
- la figure 1 contenant un schéma simplifié d'un système de traitement d'information ;
- la figure 2 contenant un schéma simplifié d'un décodeur numérique ;
- la figure 3 contenant un schéma simplifié d'un autre décodeur numérique.

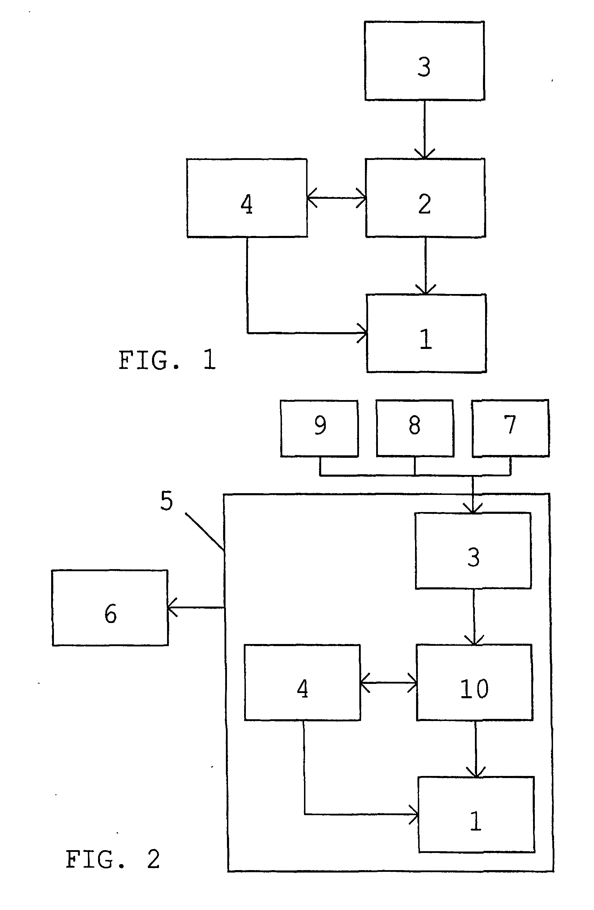

Un système de traitement d'informations représenté dans la figure 1 peut être réalisé en utilisant un système d'exploitation 1. Le système d'exploitation 1 comprend un logiciel permettant de gérer des tâches, allouer de l'espace dans une mémoire et d'adresser des dispositifs périphériques en liaison avec le système de traitement d'informations.

Un système d'exécution 2 reçoit directement ou indirectement par le biais d'une mémoire des données d'une application 3. Le système d'exécution 2 permet d'exécuter la suite d'instructions véhiculées par les données. Le système d'exécution 2 peut être réalisé à l'aide d'un logiciel. Le système d'exécution 2 communique avec le système d'exploitation 1 afin d'accéder notamment aux dispositifs périphériques et à une mémoire (non représentée) du système de traitement d'informations.

Le système de traitement d'informations peut comprendre un gestionnaire d'applications 4. Ce dernier permet d'exécuter un jeu d'instructions de gestion. Ainsi, le gestionnaire d'applications 4 permet d'influer sur le système d'exploitation 1 et/ou sur le système d'exécution 2 lorsque l'application est exécutée par exemple. Il serait par exemple possible que le gestionnaire d'applications 4 indique au système d'exploitation 1 quelles priorités à donner à des commandes provenant du système d'exécution 2 lorsque l'application est exécutée.

Le système d'exploitation, le système d'exécution et le gestionnaire d'applications sont, selon le présent exemple, des logiciels exécutés par un microprocesseur ou un moyen équivalent. Ces logiciels sont stockés dans une ou plusieurs mémoires de l'appareil de la figure 1.

Un décodeur numérique 5 de télévision 6 représenté dans la figure 2 permet de recevoir une application 3 par le biais d'un récepteur satellite 7, d'un réseau câblé 8 et/ou d'une antenne hertzienne 9. Le décodeur est par exemple un décodeur répondant aux standards DVB et MPEG II. L'application est transmise dans un flux numérique multiplexé, ce dernier ne transportant pas forcément un programme audiovisuel de télévision. Il est également possible de recevoir d'autres applications sur d'autres multiplex. Par ailleurs, il est aussi possible de recevoir des applications par l'intermédiaire d'un canal numérique modulé sur un signal analogique et multiplexé temporellement avec un signal de télévision analogique, mais dans la suite, on se placera généralement dans le cas d'un système totalement numérique.

Le système d'exploitation 1 permet notamment de gérer des entrées/sorties et une mémoire (non représentée) du décodeur numérique 5. Une machine virtuelle 10 permet d'exécuter l'application 3. La machine virtuelle 10 est un exemple de système d'exécution 2 qui permet d'exécuter une application écrite en langage dit portable. Une autre machine virtuelle 10 pourrait être implémentée pour un système de traitement d'informations autre que le décodeur numérique 5, permettant ainsi d'exécuter l'application 3 sur cet autre système.

Le décodeur numérique 5, et plus spécialement, l'ensemble formé par le système d'exploitation 1 et la machine virtuelle 10 peuvent être conçus pour exécuter plusieurs applications de façon multitâche, c'est-à-dire en même temps.

Le décodeur numérique 5 comprend en outre des composantes matérielles et/ou logicielles non représentées telles que un ou plusieurs pilotes pour que le système d'exploitation puisse communiquer avec des dispositifs périphériques, une interface utilisateur permettant à un utilisateur de communiquer avec l'application 3 exécutée ou avec le décodeur numérique 5 et pouvant comporter une ou plusieurs touches de fonction, une mémoire permettant de stocker l'application 3, d'éventuelles autres applications ou des données graphiques, etc. ... Le décodeur peut également comprendre des moyens de décodage (décodage audio et vidéo MPEG II selon le présent exemple) permettant de décoder un flux de données audiovisuelles démultiplexé à partir d'un flux numérique multiplexé et de transmettre la vidéo décodée à la télévision 6.

Le gestionnaire d'application 4 permet d'exécuter un jeu d'instructions de gestion et communique avec la machine virtuelle 10 et le système d'exploitation 1. Il réalise des fonctions qui ne sont pris en charge ni par la machine virtuelle 10, ni par le système d'exploitation 1.

Les fonctions résultantes de l'exécution du jeu d'instructions de gestion sont par exemple les suivantes :
- prise en compte d'un état de l'application en exécution lorsqu'un changement de transpondeur (correspondant à flux multiplexé) ou de service survient. Le changement de transpondeur/service peut être provoqué par exemple par un utilisateur, par l'application elle-même ou même par un diffuseur (non représentés) qui diffuse le contenu des flux. Le gestionnaire d'applications 4 peut, par exemple, interrompre l'application en exécution ou la mettre en veille. Le gestionnaire d'applications 4 peut provoquer un gel de la dernière image affichée sur la télévision ou afficher un graphique déterminé pendant que le changement de transpondeur et/ou de service s'opère. Il peut s'agir de palier un temps de chargement d'une autre application à partir d'un flux du nouveau transpondeur ou associée à un autre service;
- démarrer une procédure déterminée lorsqu'un chargement d'application ne s'effectue pas dans un délai déterminé ;
- configurer des touches de fonctions et les rendre actives ou non ;
- déterminer un ordre d'ouverture de composantes audio, vidéo lorsque celles-ci sont transmises avec l'application associée avec un service et que l'application leur fait appel...

Le jeu d'instructions de gestion est stocké dans une mémoire de gestion (non représentée dans la figure 2) et ne peut être modifié lors d'une utilisation normale du décodeur numérique 5. Le jeu d'instructions de gestion est relativement volumineux et complexe. Son élaboration mobilise un effort de développement considérable. Ainsi, chaque fois qu'une modification du jeu d'instructions de gestion est requise pour obtenir un fonctionnement différent du gestionnaire d'applications 4, il est nécessaire pour un fabriquant ou pour un programmeur du gestionnaire d'applications 4 de se réinvestir dans un nouveau développement d'un jeu complet d'instructions de gestion et dans une configuration nouvelle du décodeur numérique 5, notamment le remplacement ou la reprogrammation totale du gestionnaire d'applications 4, ce qui peut entraîner des coûts importants.

Il serait avantageux de pouvoir modifier le jeu d'instructions de gestion à moindre coût.

Il serait également avantageux de pouvoir mettre à jour le gestionnaire d'application 4 en évitant d'implanter une configuration nouvelle dans le décodeur numérique par une intervention du fabriquant sur le décodeur numérique.

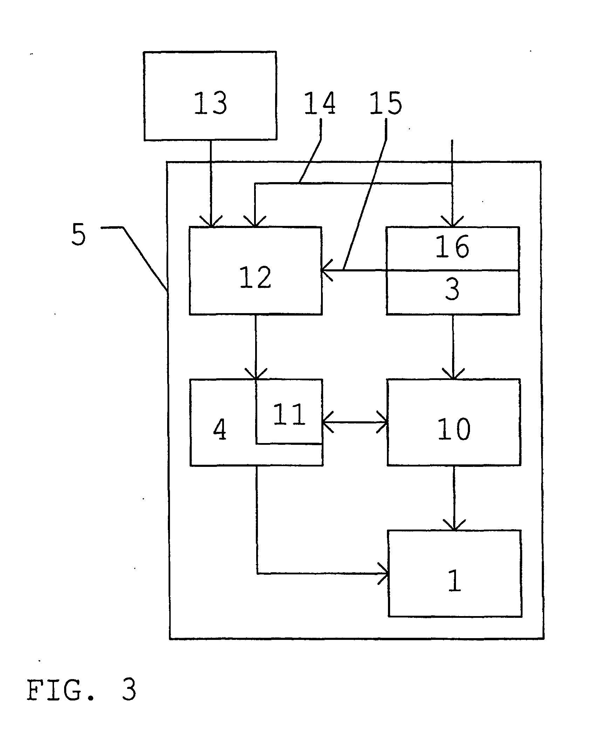

La figure 3 contient le schéma d'un décodeur numérique 5 comprenant le système d'exploitation 1 et la machine virtuelle 10.

Le gestionnaire d'application 4 comprend un jeu d'instructions de gestion variable 11, c'est-à-dire qui peut être modifié, échangé ou effacé à tout moment.

Ainsi, une partie du jeu d'instructions de gestion peut être changée pour satisfaire à une spécification variable du gestionnaire d'application. Cela évite un nouveau développement d'un jeu complet d'instructions de gestion.

Le jeu d'instructions de gestion variable 11 est exécuté par le gestionnaire d'application 4, ce qui résulte en un certain nombre de fonctions qui sont mises en oeuvre par une communication avec le système d'exploitation 1 et la machine virtuelle 10. Ces fonctions peuvent être les mêmes que celles décrites précédemment dans cette description. Toutefois, la liste des fonctions décrites n'est pas exhaustive. Elle est simplement destinée à expliquer par des exemples le rôle du gestionnaire d'applications 4.

Le jeu d'instructions de gestion variable 11 peut être stocké dans une mémoire réinscriptible, par exemple, dans une mémoire vive à accès aléatoire. Un moyen de chargement 12 permet de charger le jeu d'instructions de gestion variable 11 vers le gestionnaire d'applications 4.

Le moyen de chargement 12 peut être relié à une ou plusieurs sources d'instructions de gestion ; par exemple une interface utilisateur 13 du décodeur numérique 5, un lien direct 14 avec une source des applications, un lien d'application 15 avec l'application 3 elle-même. Dans ce dernier cas, le jeu d'instructions de gestion variable 11 peut être contenu dans un préambule 16 de l'application 3. Le préambule 16 est une première partie de l'application 3 reçue par le décodeur numérique 5. Ayant reçu le jeu d'instructions de gestion variable 11, le gestionnaire d'application 4 peut exécuter celles-ci et réaliser des fonctions correspondantes pendant que l'application 3 est chargée en totalité.

Par ailleurs, le décodeur peut comporter un jeu d'instructions par défaut, qui est court-circuité par un jeu d'instructions chargé ultérieurement, si certains critères, par exemple des critères de priorité, sont remplis. Ce court-circuitage peut être associé avec une ou plusieurs applications. Dans ce cas, le jeu d'instructions par défaut n'est pas effacé, mais demeure disponible pour d'autres applications.

Le moyen de chargement 12 est par exemple un démultiplexeur de paquets numériques de type MPEG Il Systèmes reçus par l'intermédiaire du lien direct 14. La source d'applications peut être multiple: un serveur relié au décodeur 5 par le réseau téléphonique commuté, un réseau de diffusion numérique ou analogique par satellite, câble ou hertzien... Les circuits de réception et de démodulation nécessaires ne sont pas illustrés, car en soi bien connus de l'Homme du Métier. L'existence d'un préambule 16 n'entraîne pas forcément l'existence de l'application 3. Il est concevable d'inclure un jeu d'instructions de gestion dans le préambule 16 et de transmettre celui-ci au moyen de chargement 12 sans pour autant qu'il y ait une application associée.

Dans le cas où la source des instructions de gestion est le lien direct 14 avec une source des applications, il est possible qu'un diffuseur de l'application fournisse un jeu d'instructions de gestion spécifique pour ses applications. Celui-ci peut par exemple entraîner que le gestionnaire d'application 4 affiche un graphisme caractéristique du diffuseur lors de temps d'attente causé par le chargement d'une application.

Dans le cas où la source des instructions de gestion est l'interface utilisateur 13, il est possible qu'un utilisateur détermine par exemple les fonctions sous-jacentes à certaines taches du décodeur numérique 5.

Comme déjà mentionné, si un jeu d'instructions local au décodeur existe, il peut être court-circuité sous condition par un jeu chargé.

Dans le cas où aucune source extérieure telle que l'interface utilisateur 13, le lien direct 14 ou d'application 15 ne fournit des instructions de gestion, il peut être prévu d'utiliser un jeu d'instructions de gestion standard stocké en permanence dans le gestionnaire d'applications 4.

Dans un mode de réalisation avantageux il est prévu de donner à des jeux d'instructions de gestion provenant de sources différentes des priorités à l'exécution, selon un critère prédéterminé. Ainsi il peut par exemple être défini qu'un jeu d'instructions de gestion provenant par le lien d'application 15 est prioritaire par rapport à un jeu d'instructions provenant par le lien direct 14 avec une source des applications. Le gestionnaire d'applications recevant ou ayant reçu des jeux d'instructions de gestion de ces deux liens 14 et 15, donne priorité à l'exécution de celui provenant du lien d'application 15.

Le jeu d'instructions variable 11 peut avoir un volume variable. Il pourrait par exemple être prévu que celui-ci comprend des instructions de gestion provenant de plusieurs sources d'instructions de gestion. Ainsi, si le décodeur permet l'exécution de plusieurs applications en parallèle, il est possible que le gestionnaire d'application 4 réalise des fonctions différentes pour chaque application en exécution.

On décrira dans ce qui suit un exemple de comportement d'un décodeur.

Selon cet exemple, le gestionnaire d'applications comprend les instructions suivantes :
- Afficher un bitmap de lancement (bitmap)
- Mettre l'écran video au noir
- Figer l'image video
- Définir les touches gérées par l'application au départ (groupe de touches de la télécommande)
- Prendre le focus si possible
- Ouvrir audio-video
- Fermer audio-video

Les paramètres fournis pour ou avec une application donnée sont :
- Bitmap de lancement (optionnel)
- Groupe de touches
- Priorité de l'application

On suppose que dans un premier temps, l'état du décodeur est le suivant :
• Audio-video en cours: oui
• Priorité de l'application de premier plan ('possédant le focus'): 1 (Navigateur)
• Applications en exécution :

| Nom | Fournisseur | Priorité | Focus |
|---|---|---|---|
| Meteo | Diffuseur X | 2 | Non |
| Navigateur | Fabricant du décodeur | 1 | Oui |

Le navigateur est dans le cas du présent exemple une application intégrée d'origine au décodeur et permettant à l'utilisateur de le mettre en oeuvre.

Une demande de focus de la part d'une application signifie selon le présent exemple que cette application demande à être exécutée en premier plan. Les autres applications peuvent néanmoins s'exécuter en parallèle, au 'second plan', si le système est multitâche.

Une nouvelle application est alors chargée, par exemple une application de télé-achat, fournie également par le diffuseur X, ce chargement étant déclenché par la détection de la diffusion de l'application dans le flux numérique reçu par le décodeur.
• Nouvelle application :

| Nom | Provider | Priorité | Demande Focus |
|---|---|---|---|
| Boutique | Diffuseur X | 2 | Oui |

Le jeu d'instructions statique (par défaut) du décodeur est :
Définir les touches gérées par l'application au départ (Groupe de touches)
Si Demande Focus Alors Prendre le focus si possible
(Remarque : la possibilité de prendre le focus dépend de la priorité de l'application ayant fait la demande par rapport à celle possédant le focus)

Le jeu d'instructions présent dans le signal et positionné par le diffuseur X pour l'application Boutique est le suivant :
Mettre le plan video au noir
Si audio-video en cours Alors fermer audio-video
Définir les touches gérées par l'application au départ ({Quit, P+, P-})
Si Demande Focus Alors Prendre le focus si possible

Jeu d'instructions présent dans l'application
Ouvrir audio-video

De cet ensemble de jeux résulte le comportement dynamique suivant :
1. L'application est en cours de lancement, un jeu d'instructions doit être appliqué (avant le lancement de l'application). Le diffuseur a donné un jeu d'instructions pour cette application qui est prioritaire devant le jeu d'instructions par défaut du terminal. C'est donc le jeu de l'application qui est appliqué.
2. Le plan video est mis au noir
3. L'audio-video qui est jouée est arrêtée.
4. Les touches Quit, P+ et P- de la télécommande ne seront pas gérées par le terminal lorsque l'application aura le focus.
5. Le focus est demandé, mais refusé car l'application Boutique est moins prioritaire que celle ayant le focus (Navigateur)
6. L'application est lancée (sans le focus)
7. L'application applique son jeu d'instructions complémentaires et ouvre un nouveau flux audio-video.

Le nouvel état du décodeur est alors:
• Audio-video en cours: oui
• Priorité de l'application ayant le focus: 1 (Navigator)
• Applications en exécution:

| Nom | Fournisseur | Priorité | Focus |
|---|---|---|---|
| Meteo | Diffuseur X | 2 | Non |
| Navigateur | Fabricant du décodeur | 1 | Oui |
| Boutique | Diffuseur X | 2 | Non |

Les avantages de l'invention sont nombreux.
- Un diffuseur ou un fournisseur de services peut définir lui-même le comportement d'un décodeur, relatif au lancement d'une application téléchargée, par gestion des priorités des jeux d'instructions et en incluant, par exemple, un jeu d'instructions dans le préambule de l'application, de manière à ce que ce jeu puisse s'exécuter pendant que l'application finit de se charger.
- Une diffusion de jeux d'instructions de gestion par l'intermédiaire des informations de service d'un flux numérique permet de définir les conditions de lancement d'applications, sans que la diffusion de ces jeux ne doive se faire obligatoirement en même temps que celle de l'application.
- Le fabricant du matériel (décodeur dans le cas présent) peut également contrôler le comportement d'une application. Par exemple, en choisissant les priorités de manière adéquate, il peut garder le plein contrôle du décodeur et forcer toute application à utiliser le jeu d'instructions de gestion prédéterminé.

### LISTE DES REFERENCES

1. Système d'exploitation
2. Système d'exécution
3. Application
4. Gestionnaire d'applications
5. Décodeur numérique
6. Télévision
7. Récepteur satellite
8. Réseau câblé
9. Antenne hertzienne
10. Machine virtuelle
11. Jeu d'instructions de gestion variable
12. Moyen de chargement
13. Interface utilisateur
14. Lien direct avec une source d'applications
15. Lien d'application
16. Préambule d'application

## Revendications

1. Dispositif de gestion d'une application (3) composée d'instructions exécutables par un système d'exécution (2), le dit système d'exécution communiquant avec un système d'exploitation (1) pour accéder aux ressources du dispositif, **caractérisé en ce que** le dispositif comporte un module de gestion d'applications (4) pouvant exécuter au moins un jeu d'instructions de gestion (11), les dites instructions de gestion modifiant par des fonctions le déroulement d'une application (3) exécutée par le système d'exploitation (1) et/ou le système d'exécution (2), l'exécution d'une instruction de gestion étant lancée lors d'un changement d'état de l'application (3) et/ou lors d'un événement extérieur au dispositif, le dit événement extérieur étant de préférence une commande utilisateur ou la réception de nouvelles données.

2. Dispositif de gestion d'une application selon la revendication 1, **caractérisé en ce que** les fonctions des instructions de gestion ne peuvent être exécutées par le système d'exploitation (1) ou le système d'exécution (2).

3. Dispositif de gestion d'une application selon la revendication 1 ou 2, **caractérisé en ce qu'**il comprend un moyen de chargement (12) du jeu d'instructions de gestion à partir d'une source d'instructions de gestion (13, 14, 15, 16) vers le gestionnaire d'applications.

4. Dispositif de gestion d'une application selon la revendication 3, **caractérisé en ce que** la source d'instructions de gestion est l'application (16).

5. Dispositif de gestion d'une application selon la revendication 3, **caractérisé en ce que** la source d'instructions de gestion est l'interface utilisateur (13).

6. Dispositif de gestion d'une application selon la revendication 3, **caractérisé en ce que** le dispositif possède en mémoire un jeu d'instructions de gestion standard.

7. Dispositif de gestion d'une application selon l'une quelconque des revendications précédentes, **caractérisé en ce que** le gestionnaire d'applications (4) comprend plusieurs jeux d'instructions de gestion (11) provenant de plusieurs sources d'instructions de gestion (13, 14, 15, 16) ; un jeu d'instructions de gestion déterminé étant affecté à chaque application.

8. Dispositif de gestion d'une application selon l'une quelconque des revendications précédentes, **caractérisé en ce que** des indicateurs binaires de priorité sont associés aux instructions de gestion, le module de gestion d'applications (4) exécutant d'abord les instructions de gestion dont la priorité est la plus grande.

9. Décodeur numérique (5) doté de moyens de réception (7, 8, 9) d'au moins une application (3), la dite application (3) étant composée d'instructions exécutables par un système d'exécution (2), le dit système d'exécution communiquant avec un système d'exploitation (1) pour accéder aux ressources du dispositif, **caractérisé en ce que** le dispositif comporte un module de gestion d'applications (4) pouvant exécuter au moins un jeu d'au moins une instruction de gestion (11), la dite instruction de gestion modifie par une fonction le déroulement de l'application exécutée par le système d'exploitation (1) et/ou le système d'exécution (2), l'instruction de gestion est exécutée lors du changement d'état de l'application (3) et/ou lors d'un événement extérieur au dispositif tel que et de façon préférentielle, une commande utilisateur ou la réception d'une nouvelle application.

## Patentansprüche

1. Vorrichtung zur Verwaltung einer Anwendung (3), die aus Befehlen besteht, die durch ein Durchführungssystem (2) durchführbar sind, wobei das Durchführungssystem mit einem Betriebssystem (1) für einen Zugriff zu den Ressourcen der Vorrichtung kommuniziert,
**dadurch gekennzeichnet, daß**
die Vorrichtung ein Anwenderverwaltungs-Modul (4) enthält, das wenigstens einen Satz von Verwaltungsbefehlen (11) ausführen kann, daß die Verwaltungsbefehle sich durch Abwicklungsfunktionen einer Anwendung (3) ändern, die durch das Betriebssystem (1) und/oder das Durchführungssystem (2) ausgeführt wird, daß die Durchführung eines Verwaltungsbefehls während einer Änderung des Zustands der Anwendung (3) und/oder während eines äußeren Ereignisses bei der Vorrichtung ausgelöst wird und daß das äußere Ereignis vorzugsweise ein Benutzerbefehl oder der Empfang von neuen Daten ist.

2. Vorrichtung zur Verwaltung einer Anwendung nach Anspruch 1, **dadurch gekennzeichnet, daß** die Funktionen der Verwaltungsbefehle durch das Betriebssystem (1) oder das Durchführungssystem (2) nicht durchgeführt werden können.

3. Vorrichtung zur Verwaltung einer Anwendung nach Anspruch 1 oder 2, **dadurch gekennzeichnet, daß** sie Mittel (12) zum Laden des Satzes von Verwaltungsbefehlen aus einer Quelle von Verwaltungsbefehlen (13, 14, 15, 16) zu der Anwendungsverwaltung enthält.

4. Vorrichtung zur Verwaltung einer Anwendung nach Anspruch 3, **dadurch gekennzeichnet, daß** die Quelle der Verwaltungsbefehle die Anwendung (16) ist.

5. Vorrichtung zur Verwaltung einer Anwendung nach Anspruch 3, **dadurch gekennzeichnet, daß** die Quelle von Verwaltungsbefehlen die Benutzerschnittstelle (13) ist.

6. Vorrichtung zur Verwaltung einer Anwendung gemäß Anspruch 3, **dadurch gekennzeichnet, daß** die Vorrichtung einen Standardsatz von Verwaltungsbefehlen in einem Speicher enthält.

7. Vorrichtung zur Verwaltung einer Anwendung nach einem der vorangehenden Ansprüche, **dadurch gekennzeichnet, daß** der Anwendungsverwalter (4) mehrere Sätze von Verwaltungsbefehlen (11) enthält, die von mehreren Quellen von Verwaltungsbefehlen (13, 14, 15, 16) kommen, wobei ein Satz von Verwaltungsbefehlen bei jeder Anwendung beteiligt ist.

8. Vorrichtung zur Verwaltung einer Anwendung nach einem der vorangehenden Ansprüche, **dadurch gekennzeichnet, daß** binäre Indikatoren für die Priorität den Verwaltungsbefehlen zugeordnet sind, und daß das Modul des Anwendungsverwalters (4) zunächst die Verwaltungsbefehle ausführt, deren Priorität am größten ist.

9. Digitaler Dekoder (5), der wenigstens eine Anwendung (3) durch Empfangsmittel (7, 8, 9) empfangen kann, wobei die Anwendung (3) aus Befehlen besteht, die durch ein Durchführungssystem (2) durchführbar sind, und das Durchführungssystem mit einem Betriebssystem (1) kommuniziert, um einen Zugriff zu den Ressourcen der Vorrichtung zu haben, **dadurch gekennzeichnet, daß** die Vorrichtung ein Modul eines Anwendungsverwalters (4) enthält, der wenigstens einen Satz von wenigstens einem Verwaltungsbefehl (11) durchführen kann, daß der Verwaltungsbefehl durch eine Funktion die Abwicklung der Anwendung ändert, die durch das Betriebssystem (1) und/oder das Durchführungssystem (2) durchgeführt wird, daß der Verwaltungsbefehl bei der Änderung des Zustands der Anwendung (3) und/oder während eines zu der Vorrichtung externen Ereignisses durchgeführt wird, derart, daß und vorzugsweise ein Benutzerbefehl oder der Empfang einer neuen Anwendung.

## Claims

1. Device for managing an application (3) composed of instructions executable by an execution system (2), said execution system communicating with an operating system (1) so as to access the resources of the device, **characterized in that** the device comprises an applications management module (4) which can execute at least one management instruction set (11), said management instructions modifying via functions the running of an application (3) executed by the operating system (1) and/or the execution system (2), the execution of a management instruction being initiated upon a change of state of the application (3) and/or upon an event external to the device, said external event preferably being a user command or the reception of new data.

2. Device for managing an application according to Claim 1, **characterized in that** the functions of the management instructions cannot be executed by the operating system (1) or the execution system (2).

3. Device for managing an application according to Claim 1 or 2, **characterized in that** it comprises a means (12) for loading the management instruction set from a source of management instructions (13, 14, 15, 16) to the applications manager.

4. Device for managing an application according to Claim 3, **characterized in that** the source of management instructions is the application (16).

5. Device for managing an application according to Claim 3, **characterized in that** the source of management instructions is the user interface (13).

6. Device for managing an application according to Claim 3, **characterized in that** the device possesses a standard management instruction set in memory.

7. Device for managing an application according to any one of the preceding claims, **characterized in that** the applications manager (4) comprises several sets of management instructions (11) originating from several sources of management instructions (13, 14, 15, 16); a specified management instruction set being assigned to each application.

8. Device for managing an application according to any one of the preceding claims, **characterized in that** binary priority indicators are associated with the management instructions, the applications management module (4) executing first the management instructions whose priority is the highest.

9. Digital decoder (5) furnished with means (7, 8, 9) for receiving at least one application (3), said application (3) being composed of instructions executable by an execution system (2), said execution system communicating with an operating system (1) so as to access the resources of the device, **characterized in that** the device comprises an applications management module (4) which can execute at least one set of at least one management instruction (11), said management instruction modifies via a function the running of the application executed by the operating system (1) and/or the execution system (2), and the management instruction is executed upon the change of state of the application (3) and/or upon an event external to the device such as and preferably a user command or the reception of a new application.
